# EUROPÄISCHE PATENTSCHRIFT

(11) **EP 1 794 014 B1**
(45) Veröffentlichungstag und Bekanntmachung des Hinweises auf die Patenterteilung: **10.12.2008**
(21) Anmeldenummer: 05790782.6
(22) Anmeldetag: 19.09.2005
(51) Int. Cl.: B60J 7/185

(54) **CABRIOLET-FAHRZEUG**
CONVERTIBLE CAR
CABRIOLET

(30) Priorität: 25.09.2004 DE 102004046602
(43) Veröffentlichungstag der Anmeldung: 13.06.2007
(73) Patentinhaber: Wilhelm Karmann GmbH, 49084 Osnabrück (DE)
(72) Erfinder: HABACKER, Norbert, 49565 Bramsche (DE)
(86) Internationale Anmeldenummer: PCT/DE2005/001648
(87) Internationale Veröffentlichungsnummer: WO 2006/032248

(56) Entgegenhaltungen:
- EP-A- 0 657 607
- EP-A- 0 972 665
- US-A- 1 269 311
- US-A- 4 134 611
- US-A- 5 772 275

## Beschreibung

Die Erfindung betrifft ein Cabriolet-Fahrzeug mit einem über Eingriffsglieder mittelbar oder unmittelbar an einem Windschutzscheibenrahmen sicherbaren Dach nach dem Oberbegriff des Anspruchs 1.

Es sind zahlreiche Cabriolet-Fahrzeuge bekannt, bei denen das bewegbare Dach in seiner geschlossenen Stellung über zwei seitlich außen liegende Eingriffsglieder, etwa Drehfallen, Fanghaken oder ähnliches, an dem Windschutzscheibenrahmen des Fahrzeugs sicherbar ist.

Beide Eingriffsglieder sind über im wesentlichen quer zum Fahrzeug erstreckte und damit dem Verlauf der am Windschutzscheibenrahmen anliegenden Dachspitze folgende Kraftvermittler, etwa Ketten oder insbesondere Zug- und/oder Schubstangen, mit einem zentralen manuellen oder motorischen Antrieb verbunden.

Die EP 0972 665 B1 zeigt eine typische Anordnung mit einem zentralen Antrieb, der eine vertikale Drehachse umfaßt und auf ein um diese Achse drehbares Antriebsrad einwirkt, an dem zwei Zug-Schub-Stangen einander gegenüberliegend gehalten sind. Deren Enden sind abgekröpft, um in geschlossener Dachstellung eine sichernde Über-Totpunkt-Lage zu ermöglichen und dennoch zu gewährleisten, daß bei geschlossenem Dach die Zug-Schub-Stangen der beiden Seiten nicht miteinander kollidieren. Bei Drehung des Antriebsrades wandern die Abkröpfungen der Stangen weit nach vorne bzw. hinten, so daß sich ein großer Platzbedarf in Fahrzeuglängsrichtung ergibt. Des weiteren liegen in der sichernden Über-Totpunkt-Lage die abgekröpften Enden bezüglich der Fahrzeuglängsrichtung unsymmetrisch zueinander, wodurch es erschwert wird, eine Verschlußvorrichtung dieser Art etwa bei Einbau in ein ähnliches Fahrzeug in Fahrzeuglängsrichtung verlagert zu montieren. Die Unsymmetrie kann bei Verlagerung zunehmen, so daß eine Abänderung der Verschlußvorrichtung erforderlich wird und eine Anpassung an verschiedene Fahrzeuge erschwert ist.

Die US-A-5,772,275 zeigt eine Möglichkeit, zur Beaufschlagung von Verschlußeinrichtungen abgekröpfte Zug-Schub-Stangen einzusetzen, die translatorisch quer zum Fahrzeug zu bewegen sind. Dabei sind jedoch die inneren Enden der Zug-Schub-Stangen wiederum derart abgekröpft, daß sie vor oder hinter einem mittleren Antriebsrad liegen, das um eine vertikale Achse drehbar ist. Somit ist auch hier ein großer Bauraum in Fahrzeuglängsrichtung erforderlich.

Die EP 0 657 607 A1 zeigt einen zentralen Antrieb, der als Hydraulikzylinder parallel unterhalb von seitlich ausfahrbaren Zug-Schub-Stangen gelegen und quer zum Fahrzeug ausschiebbar ist. Auch hier wird daher ein erheblicher Bauraum benötigt, was für die Sicht und Anprallsicherheit wichtigen oberen Querteil des Windschutzscheibenrahmens erhebliche Nachteile mit sich bringt.

Der Erfindung liegt das Problem zugrunde, unter möglicht guter Vermeidung dieser Nachteile eine bessere Anpaßbarkeit des Dachverschlußmechanismus' an verschiedene Fahrzeuge zu erreichen.

Die Erfindung löst dieses Problem durch ein Cabriolet-Fahrzeug mit den Merkmalen des Anspruchs 1. Hinsichtlich vorteilhafter Ausgestaltungen der Erfindung wird auf die weiteren Ansprüche 2 bis 8.

Erfindungsgemäß ist eine Bewegung der dem Betätigungsorgan zugewandten Enden der Kraftvermittler über den Umfang eines zentralen Antriebsrades entbehrlich. Diese Enden müssen daher nicht in Fahrzeuglängsrichtung verlagert werden und sind insbesondere nicht unsymmetrisch zueinander. Vielmehr werden sie als ganzes nur auf einer translatorischen Bahn ohne einen rotatorischen Anteil bewegt, wobei durch die Bewegung in ihrer Erstreckungsrichtung sichergestellt ist, daß in Fahrzeuglängsrichtung kein oder bei schräg verlaufender Erstreckung nur ein minimaler Weg zurückgelegt wird. Die Raumersparnis ist daher erheblich. Zudem ist eine Anpassung an verschiedene Fahrzeugtypen allein durch Änderung des Hubs der Bewegung in Erstreckungsrichtung der Kraftvermittler möglich. Es ist daher einfach möglich, eine erfindungsgemäße verschlußvorrichtung um einige Zentimeter in Fahrzeuglängsrichtung zu verlagern, um sie an verschiedene Fahrzeuge anzupassen. Dabei können die inneren Enden der Kraftvermittler gelenkig mit weiter außen liegenden Bereichen verbunden sein, so daß für die Gestaltung alle Freiheiten erhalten bleiben. Dabei ist durch die Rotation der Kraftvermittler um ihre eigene Achse eine raumsparende und zuverlässige Kraftübertragung zwischen dem Betätigungsorgan und den Kraftvermittlern möglich. Die Kraftvermittler insgesamt können trotz ihrer Rotation um die eigene Achse dennoch als ganzes rein translatorisch bewegt werden, so daß der Vorteil der Verlagerbarkeit in Fahrzeuglängsrichtung und der geringe Raumbedarf erhalten bleiben. Eine derartiges Aus- oder Einschieben der Kraftvermittler bei gleichzeitiger Rotation um die Erstreckungsachse ermöglicht auch eine raumsparende Anordnung eines horizontal und parallel zur Erstreckung der Kraftvermittler gelegenen Antriebs.

Insbesondere kann für die Übertragung auf die Kraftvermittler eine Hülse verwendet werden, in der die Kraftvermittler drehbar gelagert sind. Auch hierdurch ist die Erstreckung des Verschlusses in Fahrzeuglängsrichtung verkleinert. Gleiches gilt, wenn die Verhältnisse umgekehrt sind, also auf einer zentralen Spindel seitlich zwei mit als innere Enden der Kraftvermittler wirkenden Hülsen drehbar gelagert sind.

Beidseits gegenläufige Gewindegänge stellen sicher, daß im ersten der vorgenannten Fälle eine durchgehende Hülse verwendet werden kann, bei deren Drehung einander gegenüberliegende Kraftvermittler gleichzeitig aus- oder einfahren.

Besonders günstig ist es, wenn der Verschluß insgesamt modular ausgebildet ist und einen Grundträger umfaßt, auf der wahlweise ein elektrisches oder hydraulisches Antriebsorgan montierbar ist. Dann kann der gleiche Grundträger mit gleich bleibenden Abmessungen für verschiedene Fahrzeugtypen eingesetzt werden, was seine flexible Verwendbarkeit verbessert.

Weitere Vorteile und Merkmale der Erfindung ergeben sich aus einem in der Zeichnung schematisch dargestellten und nachfolgend beschriebenen Ausführungsbeispiel des Gegenstandes der Erfindung.

In der Zeichnung zeigt:

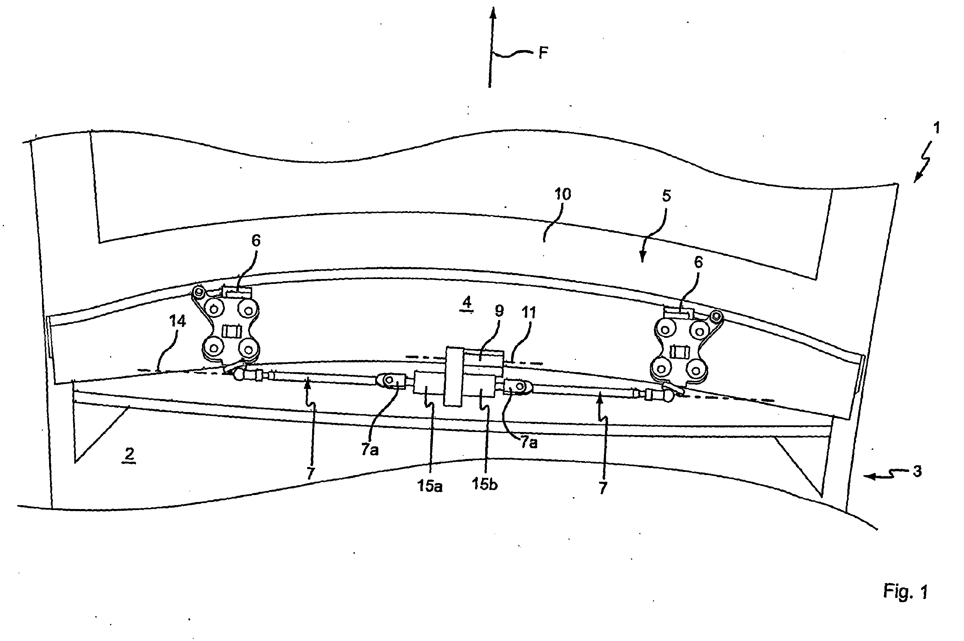

- Fig. 1: eine Ansicht von unten in das erfindungsge- mäße Fahrzeug mit dem vorderen Dachende (Dachspitze) mit angedeutetem Dachbezug und mit einem nur schematisch und transparent angedeuteten windschutzscheibenrahmen mit einem zentralen Betätigungsorgan und seit- lich außen liegenden Eingriffsgliedern zur Verriegelung (hier nicht dargestellt) am Windschutzscheibenrahmen, die über Zug- Schub-Stangen mit dem Betätigungsorgan in Wirkverbindung stehen,

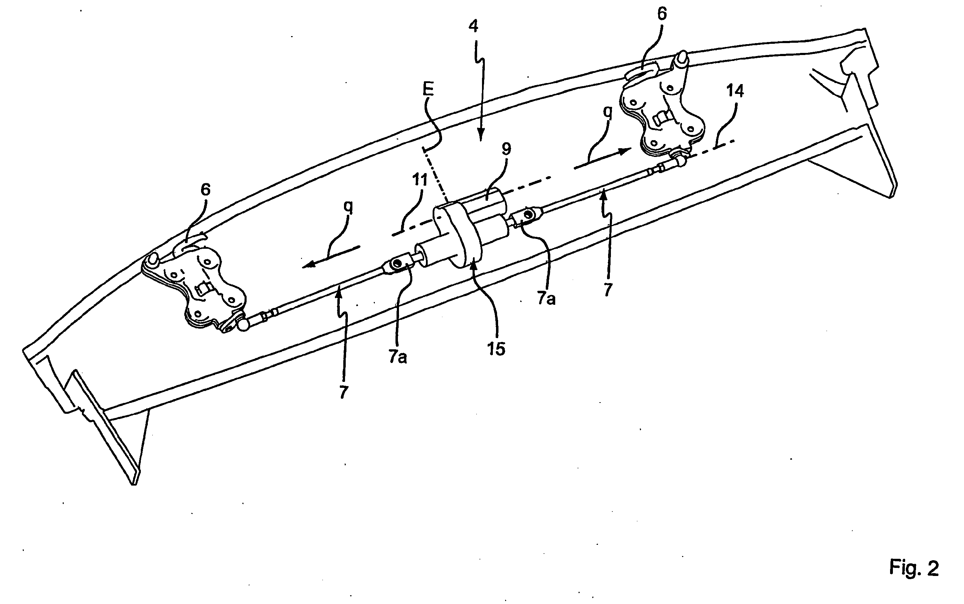

- Fig. 2: eine perspektivische Ansicht der Dachspitze von schräg unten nach Fig. 1, jedoch ohne Windschutzscheibenrahmen und Dachbezug,

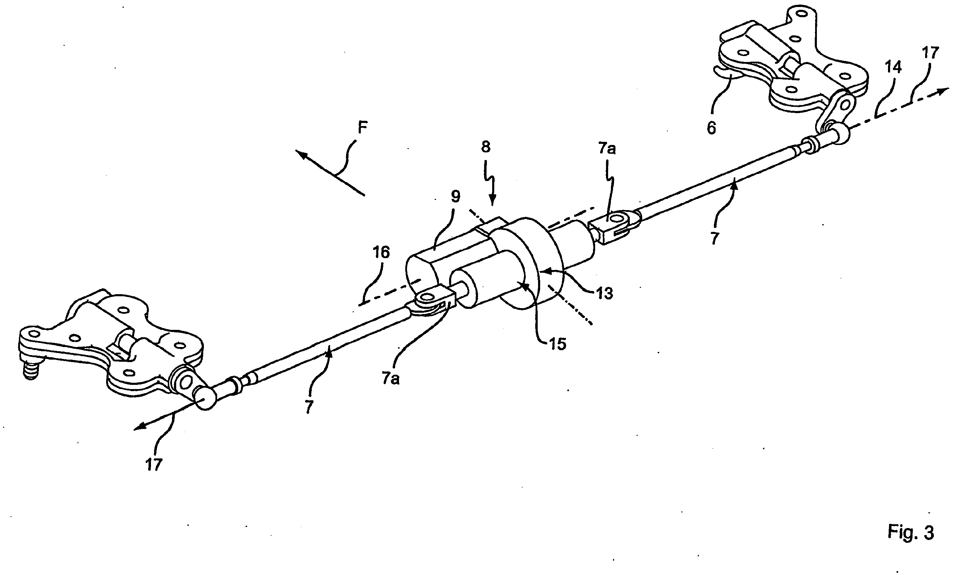

- Fig. 3: eine perspektivische Ansicht des Verschluß- moduls von schräg oben,
- Fig. 4: eine in Fahrzeugquerrichtung gesehene Ein- zelteilansicht des Antriebsorgans mit Rota- tionskörper und daran gehaltenem Kraftver- mittler,
- Fig. 5: einen Schnitt entlang der Linie V-V in Fig. 4.

Das erfindungsgemäße Cabriolet-Fahrzeug 1 ist hier als sog. Soft-Top-Fahrzeug ausgebildet, umfaßt also einen flexiblen Dachbezug 2. Auch eine Ausbildung mit einem oder mehreren festen Dachteil(en) ist gleichwertig möglich.

Ebenso kann das Fahrzeug 1 sowohl ein Zweisitzer sein als auch einen größeren Innenraum mit zwei oder mehr Sitzreihen hintereinander aufweisen.

Es umfaßt in jedem Fall ein bewegliches Dach 3, das zu seiner Öffnung im rückwärtigen Fahrzeugbereich ablegbar ist. Das in Fahrtrichtung F vordere Ende 4 des Daches 3, das häufig auch als Dachspitze bezeichnet wird, ist mit dem Windschutzscheibenrahmen 5 des Fahrzeugs 1 mittelbar oder unmittelbar zur Sicherung der geschlossenen Dachstellung verriegelbar.

Hierzu dienen in den gezeichneten Ausführungsbeispielen zwei in Fahrzeugquerrichtung q seitlich mehr oder weniger weit außen liegende Eingriffsorgane 6, die hier hakenartig ausgebildet und um horizontale Achsen schwenkbar sind. Sie können jedoch in unterschiedlichsten Weisen ausgebildet sein und zum Ver- oder Entriegeln auch translatorische oder überlagerte Rotations- und Translationsbewegungen ausführen oder um vertikale Achsen schwenken. Auch ist ihre Anzahl variabel. So kann beispielsweise auch noch ein zentrales Eingriffsorgan zusätzlich vorgesehen sein.

Die Eingrifforgane 6 sind über von einem hier zentralen Betätigungsorgan 8 ausgehende, jeweils mit einer zumindest wesentlichen Erstreckung in Fahrzeugquerrichtung q ausgreifende Kraftvermittler 7 beweglich. Diese sind hier als Zug-Schub-Stangen ausgebildet. Das Betätigungsorgan 8, das auch bezüglich der Fahrzeugquererstreckung außermittig liegen kann, kann durch einen manuellen, etwa um eine horizontale Achse schwenkbaren Griff oder durch ein hydraulisches 9 oder elektrisches Antriebsorgan gebildet sein.

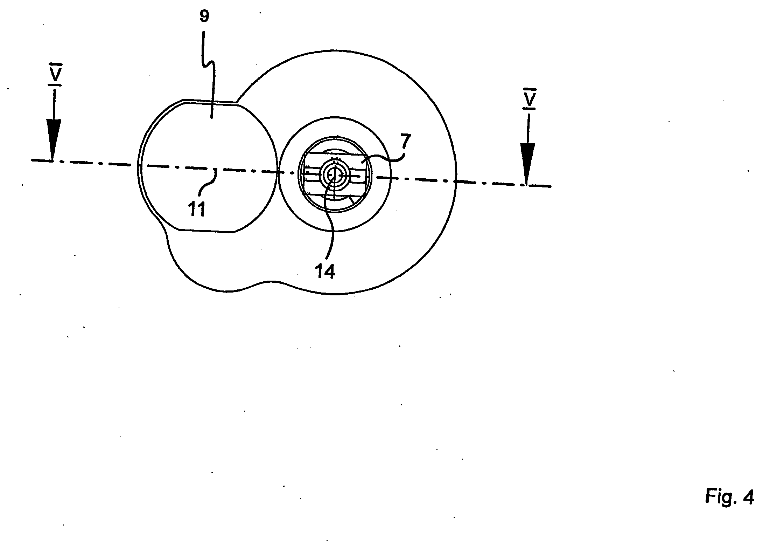

Dieses liegt zumindest nahezu parallel zur Fahrzeugquerrichtung q und in der Ebene der Kraftvermittler 7, somit im wesentlichen horizontal und raumsparend, wie beispielsweise in Fig. 4 zu erkennen ist, innerhalb der Dachspitze 4. Da nur ein relativ geringer Kraftaufwand erforderlich ist, kann das Antriebsorgan 9 derart flach ausgeführt sein, daß die Höhenerstreckung der Dachspitze 4 nicht zu dessen Aufnahme vergrößert sein muß.

Aufgrund der nur geringen Erstreckung des Betätigungsorgans 8 kann es auch möglich sein, dieses mit den Eingriffsorganen 6 und den Kraftvermittlern 7 im oberen Querrahmenteil 10 des Windschutzscheibenrahmens 5 anzuordnen.

Zumindest die der vertikalen Längsmittelebene E zugewandten Enden 7a der Kraftvermittler 7 sind zum Betätigen der Eingriffsorgane 6 insgesamt rein translatorisch verlagerbar, ohne daß diese nach innen weisenden Enden 7a der Kraftvermittler 7 auf einem Antriebsrad gehalten wären und damit quer zur Translationsrichtung beweglich wären. Die Betätigung braucht daher keinen Bewegungsraum in Fahrzeuglängsrichtung, die Tiefe der Dachspitze 4 kann minimiert werden.

Gemäß dem gezeichneten Ausführungsbeispiel ist als Antriebsorgan ein Elektromotor 9 mit einem um eine Achse 11 drehenden Rotor dargestellt, wobei der Rotor ein Zahnrad 12 umfaßt, über das er in Kontakt mit einem Rotationskörper 13 steht, der um eine hier genau in Fahrzeugquerrichtung q erstreckte Achse 14 drehbar ist. Die Achsen 11 und 14 können daher parallel zueinander liegen. Der Rotationskörper 13 umfaßt im gezeichneten Ausführungsbeispiel eine Hülse 15 mit diametral einander gegenüber gelegenen Schenkeln 15a, 15b, in denen die einwärts weisenden Enden 7a der Kraftvermittler 7 beweglich aufgenommen sind. Die Schenkel 15a, 15b weisen hierfür jeweils ein Innengewinde mit zueinander entgegengesetzter Steigung auf.

Entsprechend sind die Kraftvermittler 7 im Bereich ihrer Enden 7a mit einem komplementären Außengewinde mit in das Innengewinde eingreifenden Ansätzen 16 versehen. Auch eine Umkehrung der Verhältnisse mit einem spindelartigen Rotationskörper und darauf beweglich gehaltenen Hülsen als Enden der Kraftvermittler 7 ist alternativ möglich.

Innerhalb der Kraftvermittler 7 können, wie hier gezeichnet, Gelenke liegen, so daß die Kraftvermittler 7 im weiteren Verlauf zu den Querseiten q auch leicht abgewinkelt gegen die Fahrzeugquerrichtung verlaufen können. Sofern keine derartigen Gelenke vorhanden sind, werden die gesamten Kraftvermittler in gleicher Weise wie die inneren Enden 7a rein translatorisch aus- oder einwärts bewegt - bei Rotation um ihre eigene Achse 14.

Durch Rotation des gesamten Hülsenkörpers 15 in einem Drehsinn werden gemäß der Zeichnung daher gleichzeitig beide inneren Enden 7a der Kraftvermittler 7 parallel zur Achse 14 rein translatorisch ausgeschoben oder eingezogen. Der Hülsenkörper 15 kann einstückig ausgebildet sein.

Anstelle eines Rotationskörpers 13 kann auch ein anderes Mittel vorgesehen sein, um die Querbewegung der Kraftvermittler 7 zu bewirken. So können etwa zwei gegenläufig ein- und ausschiebende Hydraulikzylinder, die jeweils horizontal und quer zur Fahrtrichtung liegen, vorgesehen sein und jeweils einen Kraftvermittler 7 beeinflussen. Auch ein einzelner Zylinder kann über eine Umlenkung beide Kraftvermittler 7 gleichzeitig und synchron beeinflussen.

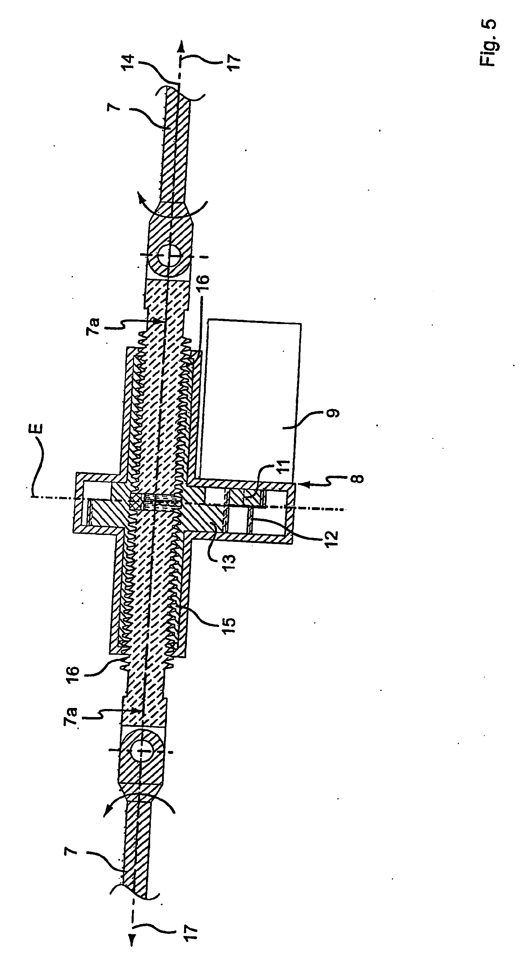

In Fig. 5 ist die geschlossene Dachstellung gezeichnet, in der die Enden 7a der Kraftvermittler 7 ihre der Fahrzeuglängsmitte nächste Stellung erreichen und von dort aus durch Drehung der Hülse 15 in Richtung der Pfeile 17 ausschiebbar sind, wobei sie dann gleichzeitig über entsprechende Kraftumlenkungen die Eingriffsorgane 6 öffnen und die Dachspitze 4 vom Windschutzscheibenrahmen 5 lösen.

Ein Grundträger der Verschlußvorrichtung 8 ist hier so ausgebildet, daß wahlweise die eine oder andere Antriebsart montiert werden kann, so daß das Modul 8 sowohl bei Fahrzeugen mit elektrischer als auch mit hydraulischer Verschlußbetätigung ohne weitere Änderungen eingesetzt werden kann, was die Einsatzmöglichkeiten erheblich erweitert und eine Großserienfertigung des Moduls 8 ermöglicht. Auch kann eine Montagemöglichkeit für einen manuellen Betätigungshebel vorgesehen sein, so daß das Modul 8 auch für eine preiswerte manuelle Betätigung nutzbar ist.

Das Verschlußmodul 8 kann in jedem Fall vor seinem Einbau vormontiert und getestet und als fertig eingestellte Einheit an die Dachspitze 4 anmontiert werden.

## Patentansprüche

1. Cabriolet-Fahrzeug (1) mit einem beweglichen, in seiner geschlossenen Stellung an einem Windschutzscheibenrahmen (5) halterbaren Dach (3), wobei zur Halterung zumindest zwei bewegliche Eingriffsorgane (6) und zumindest ein Betätigungsorgan (9) für diese vorgesehen sind, das zur Übertragung einer Betätigungskraft über jeweils mit einer Komponente in Fahrzeugquerrichtung ausgreifende Kraftvermittler (7) mit den Eingriffsorganen (6) in Wirkverbindung steht,
**dadurch gekennzeichnet,**
**daß** mittels des Betätigungsorgans (9) ein um eine Fahrzeugquerachse (14) drehbarer Rotationskörper (13) drehbeweglich ist, der dabei eine gleichzeitige Rotation zumindest eines einer vertikalen Längsmittelebene (E) des Fahrzeugs (1) zugewandten Endes (7a) eines Kraftvermittlers (7) um seine Längsachse (14) und eine Bewegung entlang dieser Achse (14) parallel zur ausgreifenden Erstreckungskomponente des Kraftvermittlers (7) bewirkt.

2. Cabriolet-Fahrzeug (1) Anspruch 1,
**dadurch gekennzeichnet,**
**daß** als Betätigungsorgan ein zumindest nahezu in Fahrzeugquerrichtung (q) und in der Ebene der Kraftvermittler (7) liegendes Antriebsorgan (9) vorgesehen ist.

3. Cabriolet-Fahrzeug (1) nach Anspruch 2,
**dadurch gekennzeichnet,**
**daß** das Antriebsorgan ein elektrisches Antriebsorgan (9) mit einer zumindest nahezu horizontal und quer zum Fahrzeug (1) liegenden Drehachse (11) ist.

4. Cabriolet-Fahrzeug (1) nach einem der Ansprüche 1 bis 3,
**dadurch gekennzeichnet,**
**daß** der Rotationskörper (13) mit zumindest einem ansteigenden Gewindegang versehen ist.

5. Cabriolet-Fahrzeug (1) nach Anspruch 4,
**dadurch gekennzeichnet,**
**daß** der Rotationskörper (13) als Hülse (15) mit dem zumindest einen Gewindegang in ihrem Innern oder als Spindel mit dem zumindest einem Gewindegang auf seiner Außenseite ausgebildet ist.

6. Cabriolet-Fahrzeug (1) nach einem der Ansprüche 4 oder 5,
**dadurch gekennzeichnet,**
**daß** der Rotationskörper (13) zu beiden Fahrzeugquerseiten (q) hin gegenläufig ansteigende Gewindegänge umfaßt.

7. Cabriolet-Fahrzeug (1) nach Anspruch 6,
**dadurch gekennzeichnet,**
**daß** die Kraftvermittler (7) jeweils mit nach außen ragenden und in die Gewindegänge eingreifenden Ansätzen (16) versehen sind.

8. Cabriolet-Fahrzeug (1) nach einem der Ansprüche 1 bis 7,
**dadurch gekennzeichnet,**
**daß** die Kraftvermittler (7) als Zug-Schub-Stangen ausgebildet sind.

## Claims

1. A cabriolet vehicle (1) with a movable roof (3), which, in its closed position, can be fastened to a windscreen frame (5), wherein, for the purpose of fastening, there are provided at least two movable engagement members (6) and, for these, at least one actuation member (9) which interacts with the engagement members (6) in order to transmit an actuation force via force providers (7) which respectively grip outwardly by means of a component in the vehicle transverse direction,
**characterised in that**
the actuation member (9) enables the rotational movement of a rotational solid (13), which is rotatable about a vehicle transverse axis (14) and which thereby brings about a simultaneous rotation of at least one end (7a) of a force provider (7), said end facing a vertical longitudinal midplane (E) of the vehicle (1), around its longitudinal axis (14) and brings about a movement along this axis (14) parallel to the outwardly gripping extension component of the force provider (7).

2. The cabriolet vehicle (1) according to Claim 1,
**characterised in that**
a drive member (9) which is situated at least almost in the transverse direction (q) of the vehicle and in the plane of the force providers (7) is provided as the actuation member.

3. The cabriolet vehicle (1) according to Claim 2,
**characterised in that**
the drive member is an electrical drive member (9) with an at least almost horizontal axis of rotation (11) which is situated transverse to the vehicle (1).

4. The cabriolet vehicle (1) according to one of Claims 1 to 3,
**characterised in that**
the rotational solid (13) is equipped with at least one ascending thread.

5. The cabriolet vehicle (1) according to Claim 4,
**characterised in that**
the rotational solid (13) is configured as a sheath (15) with the at least one thread in its interior or as a spindle with the at least one thread on its outer side.

6. The cabriolet vehicle (1) according to one of Claims 4 or 5,
**characterised in that**
the rotational solid (13) includes threads which ascend in opposite directions towards the two transverse sides (q) of the vehicle.

7. The cabriolet vehicle (1) according to Claim 6,
**characterised in that**
the force providers (7) are each provided with lugs (16) which protrude outwards and engage in the threads.

8. The cabriolet vehicle (1) according to one of Claims 1 to 7,
**characterised in that**
the force providers (7) are configured as pull/push rods.

## Revendications

1. Véhicule cabriolet (1) comprenant un toit (3) mobile pouvant être maintenu, dans sa position fermée, sur un cadre de pare-brise (5), au moins deux éléments d'engagement (6) mobiles et au moins un organe d'actionnement (9) pour ces derniers étant prévus pour le maintien, ledit organe d'actionnement coopérant avec les organes d'engagement (6) pour la transmission d'une force d'actionnement par l'intermédiaire de transmetteurs de force (7) s'étendant chacun avec une composante dans le sens transversal du véhicule
**caractérisé en ce qu'**un corps rotatif (13) pouvant pivoter autour d'un axe transversal du véhicule (14) pivote à l'aide de l'organe d'actionnement (9) et **en ce que** ledit corps rotatif opère en même temps une rotation simultanée d'au moins une extrémité (7a), tournée vers un plan médian longitudinal vertical (E) du véhicule (1), d'un transmetteur de force (7) autour de son axe longitudinal (14) ainsi qu'un déplacement le long de cet axe (14) parallèlement à la composante d'extension du transmetteur de force (7).

2. Véhicule cabriolet (1) selon la revendication 1, **caractérisé en ce que** l'organe d'actionnement prévu est un organe d'entraînement (9) se trouvant au moins à peu près dans le sens transversal du véhicule (q) et dans le plan du transmetteur de force (7).

3. Véhicule cabriolet (1) selon la revendication 2, **caractérisé en ce que** l'organe d'entraînement est un organe d'entraînement (9) électrique comportant un axe de rotation (11) situé au moins à peu près horizontalement et transversalement par rapport au véhicule (1).

4. Véhicule cabriolet (1) selon l'une des revendications 1 à 3, **caractérisé en ce que** le corps rotatif (13) est muni au moins d'un filet de vis croissant.

5. Véhicule cabriolet (1) selon la revendication 4, **caractérisé en ce que** le corps rotatif (13) est réalisé sous forme de manchon (15) avec au moins un filet de vis sur son côté intérieur ou sous forme de tige avec au moins un filet de vis sur son côté extérieur.

6. Véhicule cabriolet (1) selon l'une des revendications 4 ou 5, **caractérisé en ce que** le corps rotatif (13) présente des filets de vis croissant en sens contraire, des deux côtés transversaux du véhicule (q).

7. Véhicule cabriolet (1) selon la revendication 6, **caractérisé en ce que** les transmetteurs de force (7) sont respectivement munis de prolongements (16) dépassant vers l'extérieur et s'engageant dans les filets de vis.

8. Véhicule cabriolet (1) selon l'une des revendications 1 à 7, **caractérisé en ce que** les transmetteurs de force (7) sont réalisés sous forme de tiges de traction-poussée.
